# EUROPÄISCHE PATENTSCHRIFT

(11) **EP 1 472 773 B1**
(45) Veröffentlichungstag und Bekanntmachung des Hinweises auf die Patenterteilung: **22.05.2019**
(21) Anmeldenummer: 02795231.6
(22) Anmeldetag: 19.12.2002
(51) Int. Cl.: H02K 5/20, H02K 7/102, H02K 9/14, H02K 11/00

(54) **ELEKTROMOTOR UND BAUREIHE**
ELECTRIC MOTOR AND PRODUCT LINE
MOTEUR ÉLECTRIQUE ET GAMME DE FABRICATION

(30) Priorität: 28.01.2002 DE 10203406
(43) Veröffentlichungstag der Anmeldung: 03.11.2004
(73) Patentinhaber: SEW-Eurodrive GmbH & Co, 76646 Bruchsal (DE)
(72) Erfinder: DITTES, Gerhard, 75053 Gondelsheim (DE)
(86) Internationale Anmeldenummer: PCT/EP2002/014562
(87) Internationale Veröffentlichungsnummer: WO 2003/065547

(56) Entgegenhaltungen:
- EP-A- 0 854 560
- EP-A- 0 942 513
- DE-A1- 3 842 442
- FR-A- 2 416 386
- US-B1- 6 249 852

## Beschreibung

Die Erfindung betrifft eine Elektromotor und eine Baureihe.

Es sind Elektromotoren bekannt, die an einem axialen Ende eine mechanische Last antreiben und an ihrem anderen Ende Inkrementalgeber, Lüfter und/oder Bremsen aufweisen.

Lüfterhauben, die mit Schrauben an einem Lagerschild des Elektromotors befestigt werden, sind bekannt. Dazu muss allerdings in das Lagerschild eine Gewindebohrung eingebracht werden, also mindestens ein Arbeitsgang Bohren und ein Arbeitsgang Schneiden ausgeführt werden.

**Aus der** EP 0 942 513 A **ist als nächstliegender Stand der Technik ein Elektromotor bekannt.**

**Aus der** EP 0 854 560 A **ist ein Entwärmungskonzept für ein elektrisches Antriebssystem bekannt.**

**Aus der** FR 2 416 386 A **ist eine an einen Elektromotor adaptierbare Bremse bekannt.**

**Aus der** DE 38 42 442 A1 **ist eine Lüftungsanordnung bekannt.**

Der Erfindung liegt die Aufgabe zugrunde, bei einem Elektromotor eine möglichst einfache und kostengünstige Montage und/oder Demontage, insbesondere von Gehäuseteilen, zu ermöglichen bei gleichzeitiger kostengünstiger Ausführung.

Erfindungsgemäß wird die Aufgabe bei der Baureihe nach den in Anspruch 1 und bei der Baureihe nach Anspruch 8 angegebenen Merkmalen gelöst.

Wesentliche Merkmale der Erfindung sind, dass der Elektromotor ein Gehäuseteil, insbesondere Lagerschild, und eine Lüfterhaube, umfasst, wobei die Lüfterhaube am **Gehäuseteil lösbar befestigbar ist, und wobei zur lösbaren Befestigung ein** oder mehrere Nutensteine in einer beim Gießen hergestellte Ausnehmung vorgesehen sind.

Von Vorteil ist dabei, dass die Gesamtkosten sinken, obwohl die Zahl der Teile infolge der Verwendung von Nutensteinen gegenüber einer bloßen Befestigung mit Schrauben erhöht ist. Die Nutensteine erhöhen nämlich verschiedene Kostenarten, wie beispielsweise Lagerkosten und Verwaltungskosten. Insgesamt überwiegen aber die infolge des Weglassens der Arbeitsgänge Bohren und Schneiden eingesparten Kosten erheblich. Somit stellte sich in überraschender Weise heraus, dass mit der Erfindung eine kostengünstigere Ausführung geschaffen ist, die zusätzlich auch eine einfache und damit kostengünstige Nachrüstbarkeit oder Wartung des Elektromotors bietet.

Bei einer bevorzugten Ausführung tritt Kühlluft zwischen Gehäuseteil und Lüfterhaube, insbesondere durch einen Spalt C, aus und ist als Außenkühlung des Gehäuses vorgesehen. Von Vorteil ist dabei, dass die Befestigung bei einem außengekühlten Elektromotor anwendbar ist.

Bei einer bevorzugten Ausführung wirken zur lösbaren Befestigung Schrauben mit jeweiligen Nutensteinen derart zusammen, dass die Lüfterhaube zumindest kraftschlüssig am Gehäuseteil befestigt ist. Von Vorteil ist dabei, dass die Verbindung ohne Zerstörung von Material lösbar ist und insbesondere wiederverwendbar ist. Außerdem ist die Verbindung im Gegensatz zu Schrauben kostengünstiger ausführbar, da keine Gewindebohrung im Lagerschild des Elektromotors notwendig ist.

Bei einer bevorzugten Ausführung umfasst die Lüfterhaube Ausnehmungen für die Schrauben. Von Vorteil ist dabei, dass diese Ausnehmungen bei einer Lüfterhaube aus Spritzguss, beispielsweise als besonders kostengünstiger Kunststoffspritzguss, bei der Herstellung und Formgebung ohne weiteren Aufwand und somit kostengünstig fertigbar ist.

Bei einer bevorzugten Ausführung sind am Umfang des Gehäuseteils mehrere Nutensteine vorgesehen, wobei der größte Umfangswinkel zwischen zwei am Umfang benachbarten Nutensteinen 120° nicht überschreitet. Insbesondere sind am Umfang des Gehäuseteils vier Nutensteine vorgesehen, wobei der Umfangswinkel zwischen zwei am Umfang benachbarten Nutensteinen im Wesentlichen 90° beträgt. Von Vorteil ist dabei, dass eine stabile Befestigung der Lüfterhaube vorsehbar ist und trotz mehrerer am Umfang verteilter Ausnehmungen im Lagerschild zum Einbringen der Nutensteine keine Erhöhung von Kosten vorhanden ist.

Bei einer bevorzugten Ausführung weist die Lüfterhaube einen größeren größten Außendurchmesser auf als der größte Außendurchmesser des Elektromotors. Von Vorteil ist dabei, dass der Elektromotor außenkühlbar ist und die Befestigung mittels Nutensteinen und zugehörigen Schrauben den Kühlluftstrom nicht stört.

Wesentliche Merkmale der Erfindung sind, dass die Baureihe mindestens eine Baugröße, die jeweils mehrere Varianten von Elektromotoren umfasst, aufweist, die zumindest ein Gehäuseteil, insbesondere Lagerschild, und eine Lüfterhaube umfassen, wobei die Lüfterhaube am Gehäuseteil lösbar befestigbar ist, und wobei alle Varianten einer Baugröße eine Schnittstelle zur lösbaren Befestigung eines weiteren Teils aufweisen. Von Vorteil ist dabei, dass verschiedene Teile über die Schnittstelle verbindbar sind, wodurch bei großer Variantenzahl die Baureihe nur wenige Sorten von Teilen oder Sorten von Nachbearbeitungsvorgängen aufweist. Beispielsweise ist das nachträgliche Anbringen von Lüfterhauben an einen schon in einer Anlage montierten Elektromotor ermöglicht. Außerdem ist die Lüfterhaube an verschiedene Typen von Elektromotoren, wie Asynchron- oder Synchronmotoren, innerhalb einer Baugröße anbringbar. Des Weiteren ist sogar statt der Lüfterhaube eine beliebige, die gleiche Schnittstelle aufweisende Komponente anbaubar oder nachrüstbar, wie beispielsweise ein eine elektrische Schaltung umfassendes Gerät oder Messgerät.

Bei einer bevorzugten Ausführung ist die Schnittstelle mittels Ausnehmungen gebildet, die beim Gießen hergestellt werden, insbesondere unter Anwendung einer einzigen Entformungsrichtung. Von Vorteil ist dabei, dass trotz der am gesamten Umfang gleichmäßig verteilbaren Befestigungspunkte, mit beispielsweise drei oder vier Nutensteinen, nur eine Entformungsrichtung erforderlich ist. Somit ist sogar ein gleichzeitiges Gießen mehrerer Lagerschilde in einer Gussvorrichtung in einfacher und kostengünstiger Weise ermöglicht.

Bei einer bevorzugten Ausführung sind dazu die Ausnehmungen zum Einbringen von Nutensteinen in axialer Richtung ausgeführt. Von Vorteil ist dabei, dass die Gießform derart ausführbar ist, dass die genannte einzige Entformungsrichtung erreicht wird. Alle Öffnungen der Ausnehmungen sind nämlich in derselben Richtung, also axial, vorgesehen. Wären hingegen radiale Richtungen am Umfang verteilt, wären verschiedene Entformungsrichtungen vorzusehen, was aus gießtechnischen Gründen das gleichzeitige Gießen mehrerer Lagerschilde in einer Gussvorrichtung verhindert oder zumindest erschwert.

Bei einer bevorzugten Ausführung umfasst die Baureihe verschiedene Elektromotoren, wie Synchron- und Asynchronmotoren oder dergleichen. Von Vorteil ist dabei, dass verschiedenartige Elektromotoren eine gleichartige Schnittstelle aufweisen und somit weitere Teile, wie Lüfterhauben oder dergleichen, mehrfach verwendbar sind.

Bei einer bevorzugten Ausführung sind die Varianten von Elektromotoren mit oder ohne Lüfter, Geber, Bremse ausgestattet. Von Vorteil ist dabei, dass ein Baukastensystem geschaffen ist, bei dem der Elektromotor je nach Anforderung und Kundenwunsch verschiedenartig ausstattbar, insbesondere nachrüstbar, ist.

Bei einer bevorzugten Ausführung ist die axiale Länge der Lüfterhaube je nach Variante verschieden lang ausgeführt. Von Vorteil ist dabei, dass je nach Ausstattung eine angepasste und entsprechend platzsparende Lüfterhaube vorsehbar ist.

Weitere vorteilhafte Ausgestaltungen ergeben sich aus den Unteransprüchen.

Die Erfindung wird nun anhand von Abbildungen näher erläutert:

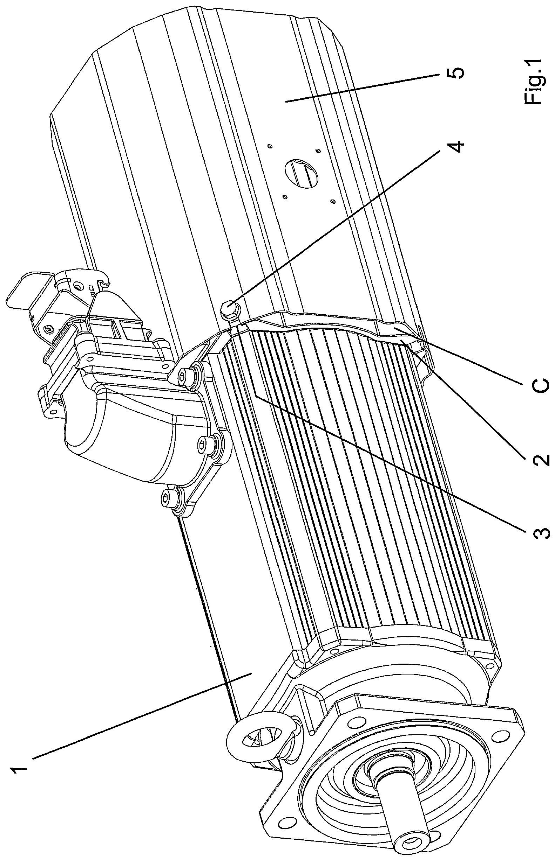

In der Figur 1 ist ein erfindungsgemäßer Elektromotor im Zusammenbau gezeigt.

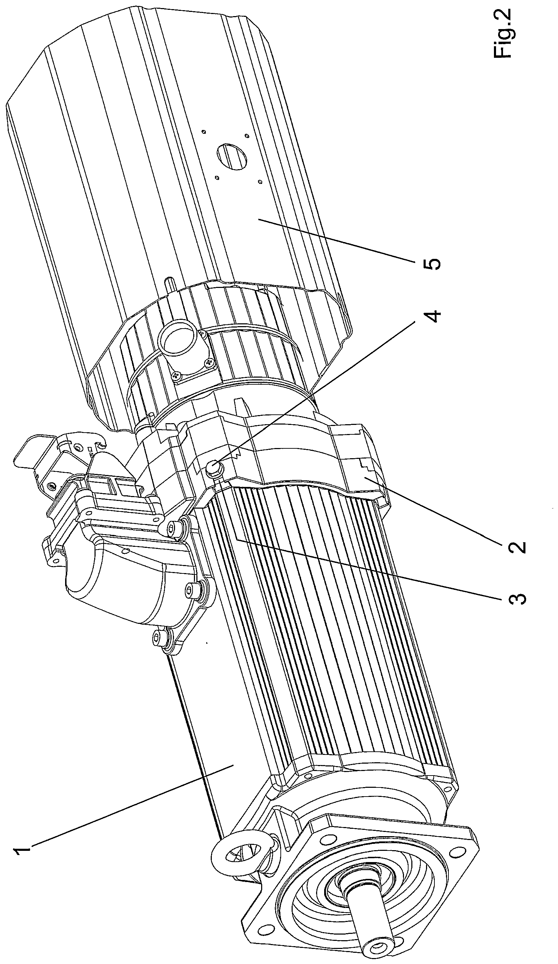

In der Figur 2 ist der erfindungsgemäße Elektromotor mit abgezogener Lüfterhaube 5 gezeigt.

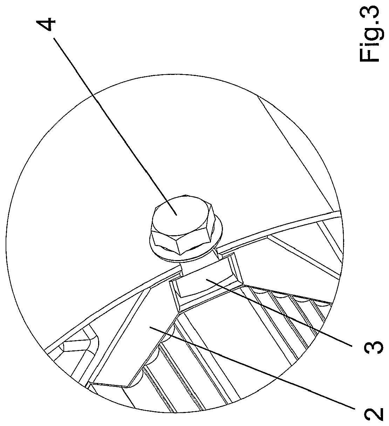

In der Figur 3 ist die Befestigung der Lüfterhaube 5 mittels Nutenstein 3 vergrößert dargestellt.

Der Elektromotor weist an seinem axialen Ende eine Welle auf zum Antreiben einer mechanischen Last. Das gesamte Gehäuse des Elektromotors umfasst das Motorgehäuse 1 und das daran befestigte Lagerschild 2, das auch als B-Lagerschild bezeichenbar ist. Mit diesem ist die Lüfterhaube 5 lösbar verbunden. Die Lüfterhaube 5 bildet einerseits Gehäusefunktion für die sich in ihrem Innern befindenden Komponenten, andererseits lenkt sie den Luftstrom derart auf das Gehäuse des Elektromotors, dass eine Außenkühlung für den Elektromotor vorhanden ist. Je nach Variante ist der Elektromotor mit Lüfter, Geber und/oder Bremse ausrüstbar, wobei diese Komponenten axial hintereinander angeordnet sind. Dazu sind dann auch verschieden lange Lüfterhauben innerhalb der Baureihe von Elektromotoren vorgesehen.

Die Gussform für das Lagerschild wird derart ausgeführt, dass im Lagerschild 2 Ausnehmungen zum Einbringen der Nutensteine 3 vorgesehen werden, wobei die Ausnehmungen in axialer Richtung derart offen sind, dass der Nutenstein 3 jeweils axial einbringbar und auch wieder herausnehmbar ist. In radialer Richtung sind die Ausnehmungen jeweils derart offen, dass die Nutensteine 3 in der Ausnehmung gehalten sind, aber die Schraubengewinde der Schrauben 4 hindurchpasst. Die Lüfterhaube 5 weist an ihrem motorseitigen Ende ebenfalls schlitzförmige Ausnehmungen auf, durch die die Schraubengewindestifte der Schrauben 4 hindurchpassen. Somit ist die Lüfterhaube 5 auf die Schraubengewindestifte aufsteckbar. Durch Anziehen der Schrauben drücken die Nutensteine und die Schraubenköpfe der Schrauben 4 Lüfterhaube und Lagerschild 2 aufeinander. Somit sind Lüfterhaube und Lagerschild 2 kraftschlüssig verbunden.

Besonders wesentlich ist bei dem Fertigen des Lagerschildes 2, dass die Ausnehmungen zum Einbringen der Nutensteine 3 in axialer Richtung orientiert und offen sind. Denn solche Ausnehmungen sind beim Gießen einfach und kostengünstig herstellbar. Im Gegensatz dazu wären radial gerichtete Ausnehmungen nur aufwendig und kostspielig herstellbar und würden darüber hinaus ein in einer Vorrichtung gleichzeitiges Gießen mehrerer Lagerschilde 2 unmöglich machen oder zumindest erschweren. Wesentlich ist dabei auch, dass zur stabilen Befestigung der Lüfterhaube am Lagerschild am Umfang vier Befestigungspunkte in im Wesentlichen gleichförmigem Abstand benötigt werden. Vier radial gerichtete Ausnehmungen würden also vier Entformungsrichtungen bedingen.
Bei der Erfindung hingegen sind die Ausnehmungen axial gerichtet und bedingen daher nur eine Entformungsrichtung. Somit ist die Gussform und der Gießvorgang in einfacher und kostengünstiger Weise ausführbar.

Wesentlich ist auch, dass mit diesem erfindungsgemäßen Elektromotor ein Lagerschild geschaffen wird, das die Nachrüstbarkeit verbessert und kostengünstiger macht. Beispielsweise bestellt ein Kunde aus der Baureihe des Herstellers einen Elektromotor ohne Lüfter und Lüfterhaube. Nach Montage und Inbetriebnahme stellt er des Öfteren fest, dass die Betriebs-Temperaturen des Elektromotors kritische Werte übersteigen. Bei Motoren nach Stand der Technik, also mit Befestigung durch Schrauben, müssen in aufwendiger Weise Gewindebohrungen am Umfang des Lagerschildes nachträglich angebracht werden. Bei der Erfindung hingegen sind die Ausnehmungen zur Aufnahme von Nutensteinen bei der gesamten Baureihe sowieso vorhanden, ohne dass Kosten erhöht sind, da eine Form und damit eine Sorte von Lagerschilden für Elektromotoren mit und für Elektromotoren ohne Lüfter verwendet werden. Der Kunde kann sogar mittels ungelernter Arbeiter eine nachbestellte Lüfterhaube in kostengünstiger Weise montieren.

Bei weiteren erfindungsgemäßen Ausführungsbeispielen werden statt vier Befestigungspunkten am Umfang drei, fünf, sechs oder mehr Befestigungspunkte verwendet, so dass der Umfangswinkel zwischen zwei am Umfang benachbarten Nutensteinen 120° nicht überschreitet.

Die genannten Ausnehmungen werden in allen Lagerschilden für Elektromotoren einer Baugröße gleich ausgeführt. Somit ist eine Schnittstelle innerhalb einer Baureihe von Elektromotoren, die mindestens eine Baugröße umfasst, geschaffen, ohne dass Kosten erhöht worden sind. Wie beschrieben, ist bei Nachrüstungen Zusatzaufwand einsparbar. Außerdem ist der Aufwand bei Demontage, beispielsweise im Zusammenhang mit Reparaturen oder Wartungstätigkeiten, vermindert.

### Bezugszeichenliste

- 1: Motorgehäuse
- 2: Lagerschild
- 3: Nutenstein
- 4: Schraube
- 5: Lüfterhaube
- C: Luftspalt

## Patentansprüche

1. Elektromotor, umfassend **ein als Lagerschild (2) fungierendes Gehäuseteil** und eine Lüfterhaube (5),
wobei die Lüfterhaube (5) am Gehäuseteil **kraftschlüssig** lösbar befestigbar ist,
**dadurch gekennzeichnet, dass**
zur lösbaren Befestigung **der Lüfterhaube (5) am Gehäuseteil** ein oder mehrere Nutensteine (3) in einer beim Gießen hergestellte Ausnehmung **des Gehäuseteils** vorgesehen sind,
**wobei die Lüfterhaube (5) an ihrem motorseitigen Ende schlitzförmige Ausnehmungen aufweist, durch die Schraubengewindestifte von Schrauben (4) hindurchpassen,**
**wobei die Lüfterhaube** (5) auf **die Schraubengewindestifte aufsteckbar ist,**
**wobei durch Anziehen der Schrauben (4) die Nutensteine (3) und die Schraubenköpfe der Schrauben (4) die Lüfterhaube** (5) und **das Gehäuseteil aufeinanderdrücken.**

2. Elektromotor nach **Anspruch 1,**
**dadurch gekennzeichnet, dass**
Kühlluft zwischen Gehäuseteil und Lüfterhaube, insbesondere durch einen Spalt (C), austritt und als Außenkühlung des Gehäuses vorgesehen ist.

3. Elektromotor nach mindestens einem der vorangegangenen Ansprüche,
**dadurch gekennzeichnet, dass**
zur lösbaren Befestigung Schrauben (4) mit jeweiligen Nutensteinen (3) derart zusammenwirken, dass die Lüfterhaube (5) zumindest kraftschlüssig am Gehäuseteil befestigt ist.

4. Elektromotor nach mindestens einem der vorangegangenen Ansprüche,
**dadurch gekennzeichnet, dass**
die Lüfterhaube (5) Ausnehmungen für die Schrauben (4) umfasst.

5. Elektromotor nach mindestens einem der vorangegangenen Ansprüche,
**dadurch gekennzeichnet, dass**
am Umfang des Gehäuseteils mehrere Nutensteine (3) vorgesehen sind, wobei der größte Umfangswinkel zwischen zwei am Umfang benachbarten Nutensteinen (3) 120° nicht überschreitet.

6. Elektromotor nach mindestens einem der vorangegangenen Ansprüche,
**dadurch gekennzeichnet, dass**
am Umfang des Gehäuseteils vier Nutensteine (3) vorgesehen sind, wobei der Umfangswinkel zwischen zwei am Umfang benachbarten Nutensteinen (3) im Wesentlichen 90° beträgt.

7. Elektromotor nach mindestens einem der vorangegangenen Ansprüche,
**dadurch gekennzeichnet, dass**
die Lüfterhaube (5) einen größeren größten Außendurchmesser aufweist als der größte Außendurchmesser des Elektromotors.

8. Baureihe,
umfassend mindestens eine Baugröße, die jeweils mehrere Varianten von Elektromotoren **nach** mindestens **einem der vorangegangenen Ansprüchen** umfasst, die zumindest ein Gehäuseteil, insbesondere Lagerschild, und eine Lüfterhaube (5) umfassen, wobei die Lüfterhaube (5) am Gehäuseteil lösbar befestigbar ist,
**dadurch gekennzeichnet, dass**
alle Varianten einer Baugröße eine Schnittstelle zur lösbaren Befestigung eines weiteren Teils aufweisen.

9. Baureihe nach Anspruch 8,
**dadurch gekennzeichnet, dass**
die Schnittstelle mittels Ausnehmungen gebildet ist, die beim Gießen hergestellt werden, insbesondere unter Anwendung einer einzigen Entformungsrichtung.

10. Baureihe nach mindestens einem der vorangegangenen Ansprüche,
**dadurch gekennzeichnet, dass**
die Ausnehmungen zum Einbringen von Nutensteinen (3) in axialer Richtung gestaltet vorgesehen sind.

11. Baureihe nach mindestens einem der vorangegangenen Ansprüche,
**dadurch gekennzeichnet, dass**
die Baureihe verschiedene Elektromotoren, wie Synchron- und Asynchronmotoren oder dergleichen, umfasst.

12. Baureihe nach mindestens einem der vorangegangenen Ansprüche,
**dadurch gekennzeichnet, dass**
die Varianten von Elektromotoren mit oder ohne Lüfter, Geber, Bremse ausgestattet sind.

13. Baureihe nach mindestens einem der vorangegangenen Ansprüche,
**dadurch gekennzeichnet, dass**
die axiale Länge der Lüfterhaube (5) je nach Variante verschieden lang ausgeführt ist.

## Claims

1. Electric motor comprising a housing part acting as an end shield (2), and a fan cowl (5),
wherein the fan cowl (5) is releasably frictionally secured to the housing part,
**characterised in that**,
to releasably secure the fan cowl (5) to the housing part, one or more sliding blocks (3) are provided in a recess in the housing part, said recess being produced during the casting, wherein, at its end facing the motor, the fan cowl (5) comprises slot-like recesses through which threaded shanks of screws (4) pass,
wherein the fan cowl (5) can be mounted on the threaded shanks,
wherein, by tightening the screws (4), the sliding blocks (3) and the screw heads of the screws (4) press the fan cowl (5) and the housing part against each another.

2. Electric motor according to claim 1,
**characterised in that**
cooling air exits between the housing part and fan cowl, in particular through a gap (C), and is intended as external cooling for the housing.

3. Electric motor according to at least one of the preceding claims,
**characterised in that**
for the purpose of the releasable securing, screws (4) interact with the respective sliding blocks (3) in such a way that the fan cowl (5) is secured to the housing part at least frictionally.

4. Electric motor according to at least one of the preceding claims,
**characterised in that**
the fan cowl (5) comprises recesses for the screws (4).

5. Electric motor according to at least one of the preceding claims,
**characterised in that**
a plurality of sliding blocks (3) are provided on the periphery of the housing part, wherein the largest peripheral angle between two adjacent sliding blocks (3) on the periphery does not exceed 120°.

6. Electric motor according to at least one of the preceding claims,
**characterised in that**
four sliding blocks (3) are provided on the periphery of the housing part, wherein the peripheral angle between two adjacent sliding blocks (3) on the periphery is substantially 90°.

7. Electric motor according to at least one of the preceding claims,
**characterised in that**
the fan cowl (5) has a larger external diameter than the largest external diameter of the electric motor.

8. Product line,
comprising at least one frame size that includes the plurality of variants of electric motors according to at least one of the preceding claims, which comprise a housing part, in particular an end shield, and a fan cowl (5), wherein the fan cowl (5) can be releasably secured to the housing part,
**characterised in that**
all the variants of a frame size have an interface for releasably securing an additional part.

9. Product line according to claim 8,
**characterised in that**
the interface is formed by means of recesses produced during casting, in particular while using a single demoulding direction.

10. Product line according to at least one of the preceding claims,
**characterised in that**
the recesses are provided for inserting sliding blocks (3) in the axial direction.

11. Product line according to at least one of the preceding claims,
**characterised in that**
the product line includes various electric motors, such as synchronous and asynchronous motors or the like.

12. Product line according to at least one of the preceding claims,
**characterised in that**
the variants of electric motors are or are not equipped with fans, sensors or brakes.

13. Product line according to at least one of the preceding claims,
**characterised in that**
the axial length of the fan cowl (5) differs depending on the variant.

## Revendications

1. Moteur électrique comprenant une partie de carter remplissant la fonction d'un bouclier de palier (2), et un capot (5) de ventilateur,
ledit capot (5) de ventilateur pouvant être fixé de manière libérable à ladite partie de carter, par engagement positif,
**caractérisé par le fait**
**qu'**un ou plusieurs coulisseau(x) (3) est (sont) prévu(s) dans un évidement de la partie de carter, ménagé au stade de la coulée, en vue de la fixation libérable du capot (5) de ventilateur à ladite partie de carter,
le capot (5) de ventilateur étant muni, à son extrémité située côté moteur, d'évidements en forme de fentes à travers lesquels s'adaptent des tiges filetées de vis (4),
ledit capot (5) de ventilateur
pouvant être emboîté sur lesdites tiges filetées desdites vis,
un blocage des vis (4) ayant pour effet de presser, les uns contre les autres, les coulisseaux (3), les têtes desdites vis (4), ledit capot (5) de ventilateur et ladite partie de carter.

2. Moteur électrique selon la revendication 1,
**caractérisé par le fait que**
de l'air de refroidissement sort entre la partie de carter et le capot de ventilateur, en particulier à travers un interstice (C), et est prévu en tant que refroidissement extérieur du carter.

3. Moteur électrique selon au moins l'une des revendications précédentes,
**caractérisé par le fait que**
des vis (4) coopèrent avec des coulisseaux (3) respectifs, en vue de la fixation libérable, de façon telle que le capot (5) de ventilateur soit fixé à la partie de carter au moins par engagement positif.

4. Moteur électrique selon au moins l'une des revendications précédentes,
**caractérisé par le fait que**
le capot (5) de ventilateur est pourvu d'évidements destinés aux vis (4).

5. Moteur électrique selon au moins l'une des revendications précédentes,
**caractérisé par le fait que**
plusieurs coulisseaux (3) sont prévus sur le pourtour de la partie de carter, l'angle périphérique maximal n'excédant pas 120° entre deux coulisseaux (3) voisins sur ledit pourtour.

6. Moteur électrique selon au moins l'une des revendications précédentes,
**caractérisé par le fait que**
quatre coulisseaux (3) sont prévus sur le pourtour de la partie de carter, l'angle périphérique mesurant, pour l'essentiel, 90° entre deux coulisseaux (3) voisins sur ledit pourtour.

7. Moteur électrique selon au moins l'une des revendications précédentes,
**caractérisé par le fait que**
le capot (5) de ventilateur présente un diamètre extérieur maximal supérieur au diamètre extérieur maximal dudit moteur électrique.

8. Gamme de production
présentant au moins un dimensionnement structurel incluant, à chaque fois, plusieurs variantes de moteurs électriques conformes à au moins l'une des revendications précédentes, qui comprennent au moins une partie de carter, en particulier un bouclier de palier, et un capot (5) de ventilateur,
ledit capot (5) de ventilateur pouvant être fixé de manière libérable à ladite partie de carter,
**caractérisée par le fait que**
toutes les variantes d'un dimensionnement structurel sont dotées d'un interface dévolu à la fixation libérable d'une partie additionnelle.

9. Gamme de production selon la revendication 8,
**caractérisée par le fait que**
l'interface est constitué d'évidements ménagés au stade de la coulée impliquant, en particulier, une unique direction de démoulage.

10. Gamme de production selon au moins l'une des revendications précédentes,
**caractérisée par le fait que**
les évidements sont configurés en vue de l'insertion de coulisseaux (3) dans une direction axiale.

11. Gamme de production selon au moins l'une des revendications précédentes,
**caractérisée par le fait que**
ladite gamme de production englobe différents moteurs électriques tels que des moteurs synchrones et asynchrones, ou de types similaires.

12. Gamme de production selon au moins l'une des revendications précédentes,
**caractérisée par le fait que**
les variantes de moteurs électriques sont pourvues ou dépourvues d'un ventilateur, d'un codeur, d'un frein.

13. Gamme de production selon au moins l'une des revendications précédentes,
**caractérisée par le fait que**
la longueur axiale du capot (5) de ventilateur est de réalisation différente en fonction des variantes.
